# EUROPEAN PATENT SPECIFICATION

(11) **EP 4 072 990 B1**
(45) Date of publication and mention of the grant of the patent: **12.03.2025**
(21) Application number: 20898165.4
(22) Date of filing: 11.12.2020
(51) Int. Cl.: B66C 23/42, B66C 23/68, B60P 1/54, B66C 23/00

(54) **ARTICULATED CRANE**
GELENKKRAN
GRUE ARTICULÉE

(30) Priority: 12.12.2019 SE 1930401
(43) Date of publication of application: 19.10.2022
(73) Proprietor: Virdenäs, Hans-Gunnar, 771 92 Ludvika (SE); Larsson, Rolf, 666 94 Dals Långed (SE); Larsson, Sven, 666 94 Dals Långed (SE)
(72) Inventor: GUNNARSSON, Wiking, 666 94 Dals Långed (SE)
(74) Representative: Glawe, Delfs, Moll
(86) International application number: PCT/SE2020/051197
(87) International publication number: WO 2021/118446

(56) References cited:
- EP-A1- 2 568 084
- WO-A1-02/066360
- WO-A1-2006/090015
- WO-A1-2014/087049
- WO-A1-90/14302
- WO-A1-97/41056
- WO-A2-98/39243
- SE-C2- 531 467

## Description

### TECHNICAL FIELD OF THE INVENTION

The invention relates to a crane construction arranged for lifting and moving a load hanging in the tip of the crane or for carrying and operating a tool arranged in the tip of the crane.

### BACKGROUND AND PRIOR ART

Cranes of a similar type are usable and utilized in various areas of activity, such as in the forestry and agriculture, construction, environmental control, the shipping and harbour industry and the fishing industry, as well as in the manufacturing industry and in assembly workshops. For this purpose, the crane at its tip can support various tools such as gripping means, harvester heads, skewers and loops, etc. A crane according to the invention is also well suited for use in automation or in healthcare, e.g. for lifting and moving patients in slings.

Another use of articulated cranes of a similar type is in the form of crane arms on forwarders, harvesters or on timber trucks and forestry tractors. Examples of older cranes intended for this use are given in SE 521 258 and SE 463 668, among others.

The crane according to the present invention is of the type which comprises a lifting boom which at one end is pivotally journaled in a pillar (or stand), and which at the opposite end pivotally supports a crane arm. The lifting boom consists of a main beam and a parallel strut which are connected by means of links that allow both coordinated and relative pivoting movements between the lifting boom and the crane arm.

Examples of known cranes of similar parallel strut construction that can be mentioned are the loading crane described in WO 02/066360 A1 and in SE 531 467 C2. Document SE531467C2 discloses a crane according to the preamble of claim 1.

A common feature of these cranes is that the movements of the lifting boom and the crane arm are controlled in a common center of rotation in the journaling of the lifting boom at the pillar.

### SUMMARY OF THE INVENTION

The object of the invention is to provide an alternatively designed articulated crane, the design and composition of which result in reduced power requirements and energy consumption.

Another object of the invention is to provide an articulated crane, the design and composition of which result in an even crane tip speed when the crane arm is folded out and folded in, respectively.

Another object of the invention is to provide an articulated crane which has a uniform crane tip speed when the crane arm is folded out and folded in, respectively, independent of lifting height within the working range of the crane arm.

A further object of the invention is to provide an articulated crane, the design and composition of which result in a substantially horizontal crane tip movement when folding out and folding in the arm.

Yet another object of the invention is to provide an articulated crane, the design and composition of which result in the lifting moment acting in the crane tip becoming substantially the same in the different angular positions of the crane arm, at a constant energy supply.

Yet another object of the invention is to provide an articulated crane, the design and composition of which result in the speed of lifting and lowering movements, at a constant energy supply, remaining substantially the same in the different angular positions of the crane arm.

One or more of these objects are fulfilled by an articulated crane comprising at least three parts articulately interconnected in a plane in the form of a pillar (or stand), a crane arm and a lifting boom inserted therebetween. The lifting boom is pivotally connected to the pillar via an inner joint and pivotally connected to the crane arm via an outer joint. The lifting boom is provided with a main beam and a parallel strut (or arm) pivoting parallel to the main beam, which via an inner link articulately connected between the parallel strut and the main beam, as well as an outer link articulately connected between the parallel strut and the main beam, together with the main beam form a parallel trapezoidal geometry, wherein the inner link, hereinafter referred to as the horizontal link, is arranged to be actuated by an angular adjusting device acting between the main beam and the horizontal link in order to adjust the angular position of the crane arm relative to the main beam in the outer joint by pivoting around its journaling point in the main beam, as well as via the parallel strut and the outer link, hereinafter referred to as the knee link, to set the angular position of the crane arm relative to the main beam in the outer joint. A lifting yoke is pivotally journaled in the main beam, which for lifting and lowering the lifting boom is actuated by a lifting device. The lifting yoke and the horizontal link are mutually interconnected via a strut of fixed length connected to both of them, whereby the lifting yoke and horizontal link slavishly follow each other in movements driven by the angle adjusting device.

In the present invention, the lifting yoke is designed as a two-armed lever which at its one end is articulately coupled to the lifting device, and which at the opposite end is articulately coupled to said strut of fixed length, and is pivotally journaled in the main beam via a pivot point located between said ends which is separate from the journaling of the main beam in the pillar.

With this composition, the angle of the knee joint between the main beam and the crane arm determines the length of the lever between the journaling point of the main beam in the pillar and the journaling point of the lifting device in the lifting yoke. In other words, the length of the lever is proportional to the angle of the knee joint, so that if the angle between the main beam and the crane arm increases or decreases, the length of the lever also increases or decreases in proportion thereto.

An advantage and technical effect that is thereby gained is that the lifting torque in the crane tip becomes practically the same regardless of the knee joint angle at constant energy supply.

An additional advantage and technical effect that is gained by the proportional relationship between knee joint angle and lever length is that the speed of movement of the crane tip remains substantially constant during folding out and folding in of the crane arm.

In one embodiment of the invention, the lifting device is a hydraulic cylinder connected in parallel with a pneumatic or gas-hydraulic energy storage means. The energy storage means may comprise a pneumatic or gas-hydraulic cylinder which is journaled in the lifting yoke at the same journaling point as the lifting device.

In other embodiments, and especially in applications with lower power requirements or in environments where hydraulic fluids should be avoided, angle adjusting devices and lifting devices may alternatively consist of pneumatic piston-cylinder units or of electric linear drive devices. Also in these embodiments, an energy storage means can advantageously be arranged to operate in parallel with the lifting device.

In all these embodiments the energy storage means provides the advantage and technical effect that the loading moment when lowering the lifting boom can be used for compressing a gas volume to a working pressure which can be utilized when lifting the lifting boom in a later working operation.

In one embodiment, the energy storage means comprises a sub-volume of the internal cavity of the pillar, which sub-volume is in fluid communication with a pneumatic or gas-hydraulic cylinder. Particularly in high load applications, this design allows gas volume and pressure to be dimensioned as needed without the volume of the pneumatic or gas hydraulic cylinder having to be oversized.

In one embodiment, the pillar is provided with a connection for refilling or emptying gas from the internal gas volume of the pillar. In this way, the gas pressure can be adjusted for balancing the dead weight of the crane arm with a tool supported in the crane tip.

In one embodiment of the invention, the energy storage means comprises an air or a gas hydraulic cylinder arranged on respective sides of a lifting device.

In embodiments for lighter loads, an alternative energy storage means may comprise a torsion spring inserted in the pivot journaling between the pillar and the lifting boom.

Several embodiments and detailed solutions appear below from the detailed description and the appended claims.

### BRIEF DESCRIPTION OF THE DRAWINGS

Exemplary embodiments of the invention are explained in more detail below with reference to the accompanying drawings, of which
- Fig. 1: shows the crane with the lifting boom lowered below a horizontal plane on which the crane rests,
- Fig. 2: shows the crane with the lifting boom raised to a position almost parallel to the horizontal plane,
- Fig. 3: shows the crane with the lifting boom raised and during pivoting forward of the crane arm,
- Fig. 4: shows the crane with the lifting boom lowered to a position almost parallel to the horizontal plane and with the crane arm fully extended,
- Fig. 5: shows the crane with the lifting boom raised to an almost vertical position,
- Fig. 6: **is a diagram showing potential change ΔM of the length of the lever M in** different crane arm positions, and
- Fig. 7: shows examples of the movement paths of the arm tip as well as lifting torques in different positions within the operative working area of the crane.

### DETAILED DESCRIPTION OF PREFERRED EMBODIMENTS

It should initially be emphasized that the attached drawings are schematic and only intended to illustrate the inventive concept, so that no dimensions or angles can be deduced by measurement in the drawings.

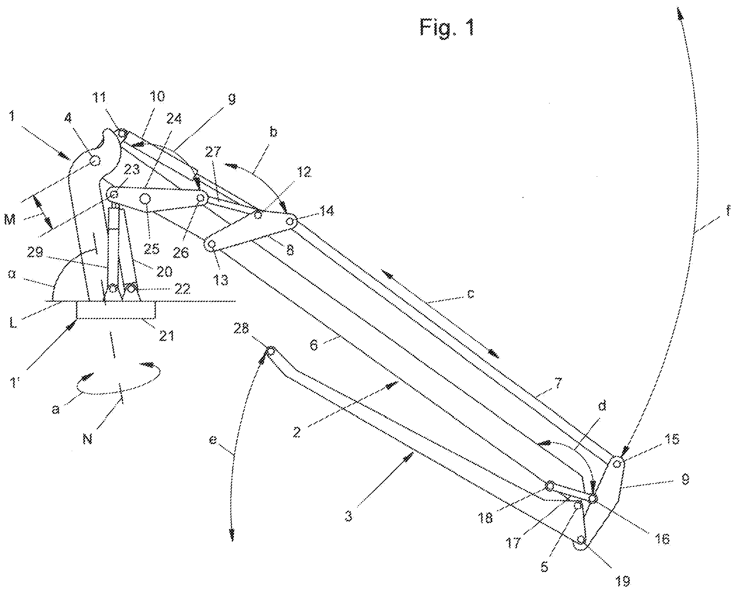

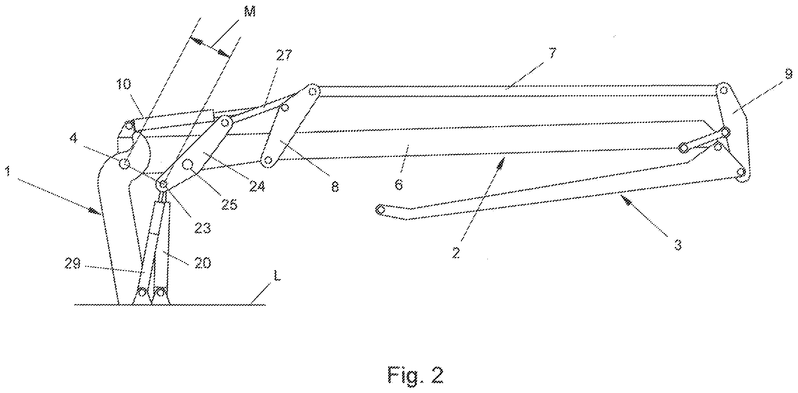

Thus, Figs. 1 to 5 illustrate some of the positions of the crane in motion between an almost extreme lowered position and an almost extreme upright position.

With reference to the drawings Figs. 1-5, an articulated crane according to the invention comprises three mutually articulately interconnected parts, namely a pillar 1, a lifting boom 2 and a crane arm 3. The lifting boom 2 is pivotally journaled in the pillar 1 via an inner pivot joint 4, and the crane arm 3 is pivotally journaled in the lifting boom 2 via an outer pivot joint 5. The pivot joints 4 and 5 have pivot axes aligned in parallel, whereby the lifting boom and the crane arm are mutually movable in a common plane. When using the crane, this plane typically has a substantially vertical orientation.

The pillar 1 can be attached to a working platform, which in Fig. 1 is symbolically illustrated by the reference numeral 1'. In practice, this working platform can constitute a stationary or movable working platform, such as a structure included in a vehicle or the like. Hence, the pillar 1 may be rotatably arranged in the working platform around an axis N, as illustrated by the double arrow a in Fig. 1. The pillar 1 is suitably arranged with an inclination α relative to the horizontal line L so that space is created in front of the pillar 1 for other movable elements in the crane described below. It is also conceivable that the pillar 1 is arranged in a controlled tiltable manner in directions other than the direction N.

In this context, it can be mentioned that the crane can be supported by an autonomous working platform or by a working platform that is included as part of a machine, e.g. as part of the frame of a vehicle. The crane can alternatively be mounted on the same vehicle upper part such as a cab, and can form part of the framework in vehicles with a rotatable upper part/cab. The working platform may be arranged rotatable about an imaginary mainly vertical axis, and may also be tiltable or rotatable in a vertical plane.

The geometry of the crane can be changed by a horizontal link 8 being actuated by an angle adjusting device 10 which is arranged to act between a main beam 6 included in the lifting boom and the horizontal link 8. The angle adjusting device 10 is a pneumatically, hydraulically or electrically actuated linear actuator. In the exemplary embodiment, the angle adjuster 10 is realized in the form of a piston-cylinder unit 10. The angle adjusting device 10 is arranged above the main beam 6, and is articulately connected with one end to the main beam 6 at a pivot point 11, while its other end is articulately connected to the horizontal link 8 at a central pivot point 12 of the horizontal link 8 pivotally journaled at three points. The horizontal link 8 is pivotally journaled at one end in the beam 6 at a pivot point 13, and at the opposite end articulately connected to one end of a drawbar 7 at a pivot point 14. The drawbar 7 is at its other end, at a pivot point 15, articulately connected to one end of a knee link 9 shaped like a yoke and pivotally journaled at three points. The knee link 9 is pivotally coupled at a central pivot point 16 to the main beam 6 via a strut link 17 and the pivot point 18. The knee link 9 is articulately connected at its other end with the crane arm 3 at a pivot point 19, which has an eccentric position with respect to the pivot 5 between the crane arm 3 and the head beam 6.

It will be appreciated that the angle adjusting device 10, by extension and retraction, respectively, controls the pivoting of the horizontal link 8 according to the double arrow b, the longitudinal displacement of the drawbar 7 according to the double arrow c, the pivoting of the knee link 9 according to the double arrow d and finally the crane arm 3 according to the double arrow e.

A linearly acting lifting device 20 is arranged for lifting and lowering the lifting boom 2 relative to the pillar 1 during rotation in the joint 4 (see the double arrow f in Fig. 1). The lifting device 20 can be articulately journaled directly in the pillar, or indirectly journaled next to the pillar, for example via a foot 21 belonging to the pillar. The foot 21 may alternatively be included in the above-mentioned working platform 1'. In the exemplary embodiment, the lifting device 20 consists of a piston-cylinder unit. In other applications, the lifting device may alternatively be an electric linear actuator. In the exemplary embodiment, the cylinder end of the lifting device is directly or indirectly pivotally journaled at the pillar 1 in a pivot point 22, while its piston rod end, via a pivot point 23, is articulately coupled to one end of a three-point pivotally journaled lifting yoke 24. The lifting yoke 24 is, at a central pivot point 25, rotatably journaled in the main beam 6 for pivoting around the pivot point 25 according to the double arrow g. However, the lifting yoke 24 is at its other end, at the pivot point 26, articulately connected to a first end of a strut 27, the second end of which is articulately connected to the horizontal link 8, more specifically at the pivot point 14. The strut 27 is of a fixed length, which means that the rotation of the lifting yoke 24 around the pivot point 25 slavishly follows the rotation of the horizontal link 8 around the pivot point 13.

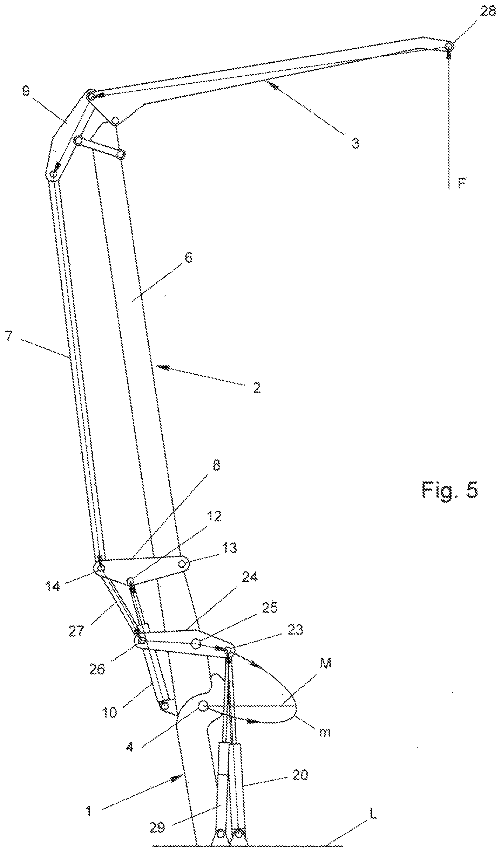

With reference to Fig. 5, it should also be illustrated that the path F of the force between the crane arm tip 28 and the lifting device 20, in case of a hanging load, goes in the direction of the arrows via the crane arm 3, the knee link 9, the parallel strut 7, the strut 27 and the lifting yoke 24. More specifically, the horizontal link 8 forms a one-armed lever in which the acting force (10) and the resulting force (7) are located on the same side of the pivot point 13. On the other hand, the lifting yoke 24 forms a two-armed lever in which the acting force (20) and the resulting force (27) are located on opposite sides of the pivot point 25. The lengths of the levers are adapted so that the angle adjusting device 10 can balance the pressure torque of the lifting device 20 and control the movements of the crane arm in unloaded as well as in loaded condition. The coordination between the lifting device and the angle adjusting device can be done spontaneously or be forcibly controlled in a hydraulic control valve assembly during manual handling, and can in an automated process alternatively be carried out by a software-controlled processor unit.

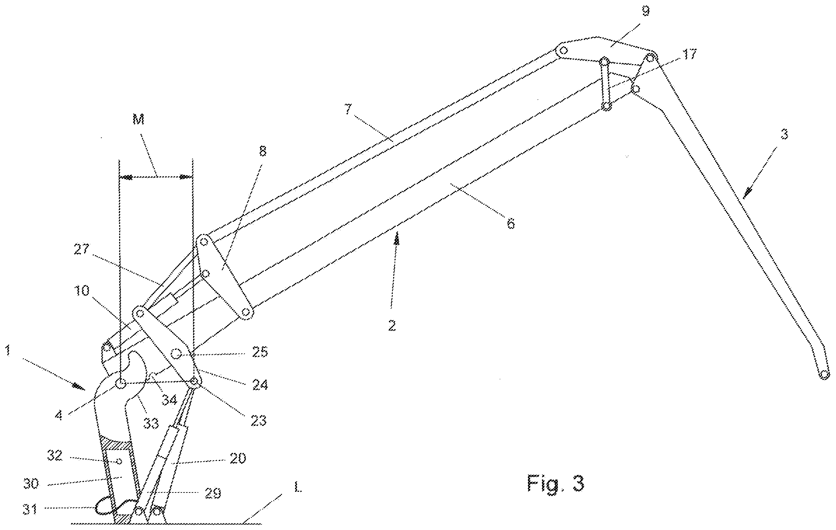

Extra lifting force can be intermittently provided by means of an energy storage means which stores the potential energy of a load hanging in the crane arm tip 28. For this purpose, a damping cylinder 29 is connected to the lifting yoke 24, parallel to the lifting device 20. The damping cylinder and the lifting device may be journaled on a common shaft at the pivot point 23. The damping cylinder 29 may consist of a pneumatic or gas-hydraulic piston-cylinder unit, the gas volume of which is compressed when lowering a load and expands when lifting the load. If applicable, the gas volume of the damping cylinder can be in direct fluid connection with an internal gas volume 30 arranged in the pillar 1 (see Fig. 3). The connection may consist of a flexible pressure hose 31. A connection 32 may, if applicable, be arranged for refilling or for emptying gas from the pillar 1 in order thus to adjust the gas pressure, primarily for balancing the dead weight of crane arm, or alternatively for balancing of a load hanging in the crane arm tip.

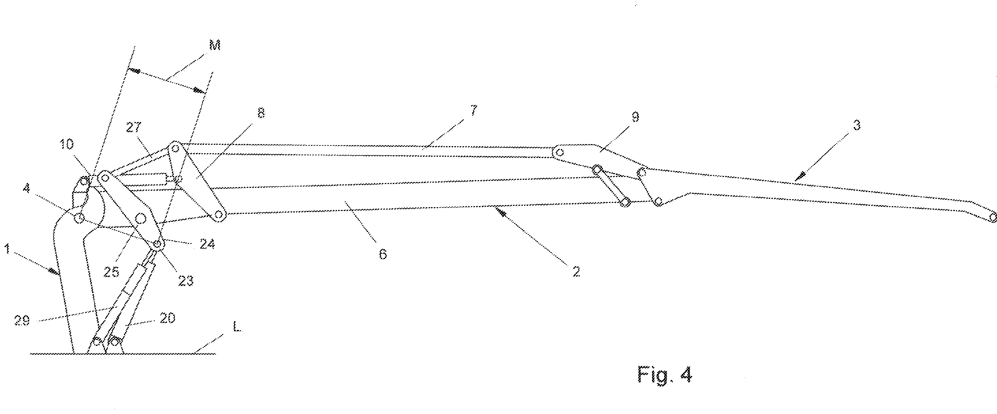

In other words, the lifting device 20 is arranged to act against the pivotally journaled lifting yoke 24, which means that the point of attack of the force is not fixed but is changed by the angle adjusting device 10 acting on the lifting yoke 24, via the horizontal link 8 and the strut 27. This achieves a synchronization between lifting/lowering and folding out/folding in which changes the length of a lever M between the pivot points 4 and 23 proportional to the folding out and folding in of the crane arm 3. The lever at the pivot point 23 follows a path m (see Fig. 5) and is located at the furthest point of the path, seen from the pivot joint 4, when the crane arm 3 is maximally angled from the lifting boom 2 (see Fig. 4). As a result, the length of a torque arm starting from the pivot point 4 also changes in proportion to the folding of the crane arm. In this way, the force exerted by the lifting device 20, at a given load, can be utilized more or less uniformly in the different positions of the crane arm.

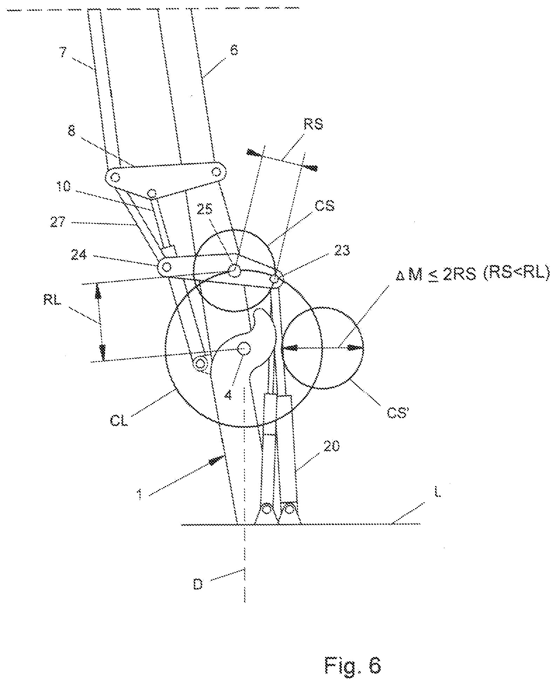

Fig. 6, which is partially broken away, illustrates how the change in length of the lever ΔM depends on two coordinated rotations: the rotation of the pivot point 25 about the pivot point 4, and the rotation of the pivot point 23 around the pivot point 25. When lowering or lifting the main beam 6, the pivot point 25 moves clockwise and anti-clockwise, respectively, along the periphery of a circle CL, the radius of which is the distance RL between the pivot points 4 and 25. When the crane arm is folded in or out, the pivot point 23 is moved clockwise and counterclockwise, respectively, along the periphery of a circle CS, the radius of which is the distance RS between the pivot points 25 and 23. The free-standing rotation CS' in Fig. 6 **demonstrates that the change in length ΔM** of the lever may amount to a maximum of the diameter of the circle CS, i.e. **ΔM ≤ 2RS.** A limiting condition when dimensioning the crane is that in the fully retracted position of the crane arm with the lifting boom in a horizontal position (such as in transport position), the lifting point 23 of the lifting device must still be in front of a vertical line D through the pivot point 4, since otherwise a locked position is risked. The radius RS, i.e. the distance between the pivot points 23 and 25 in the lifting yoke 24, shall thus be smaller than the distance RL between the pivot points 4 and 25 in the beam 6, i.e. RS < RL. No generally applicable exact measurements for RS and RL should be given here as they are dependent on the application, but RS preferably amounts to the order of 30-70 % of RL, and is at least in the order of 40-60 % of RL, and preferably constitutes about 50 % of RL.

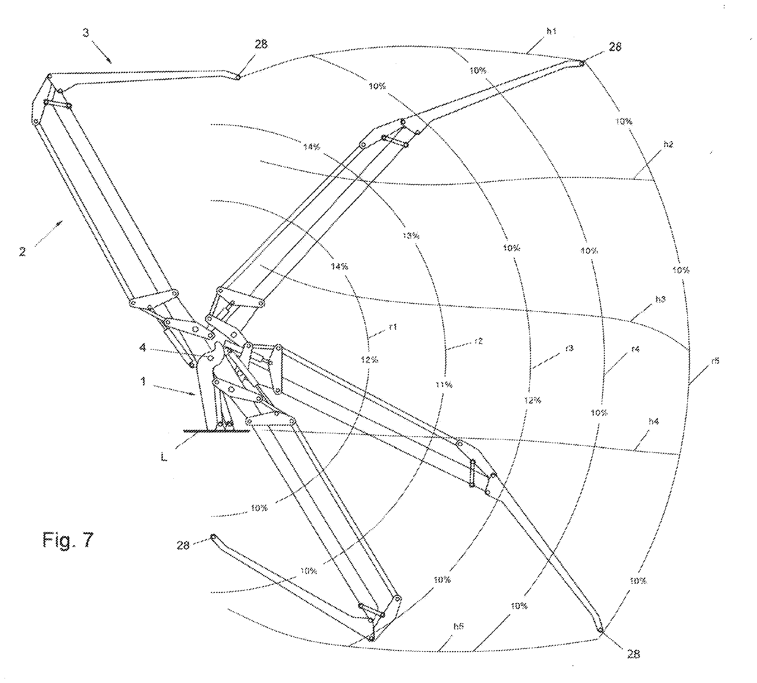

By coordinated operation of the angle adjusting device 10 and the lifting device 20, the crane arm tip 28 can be controlled to perform a substantially horizontal movement when folding out or folding in the crane arm 3. This is illustrated in Fig. 7, in which a number of movement paths for the crane arm tip 28 are shown h1, h2, h3, h4 and h5 at different heights within the working area of the crane.

Fig. 7 is a diagram illustrating the movement pattern of a crane with a geometry corresponding to the schematically shown crane in the exemplary embodiment. In this geometry these percentages are also calculated which in Fig. 7 indicate the lifting force resulting in the crane arm tip as part of the pressure force exerted by the lifting device 20 at different radial distances r1 - r5 from the inner pivot 4. Fig. 7 illustrates how the required torque can be equalized within the working range of the crane as a result of the proportionally varying length of the lever (and the associated torque arm).

It should be realized that each application requires adaptation of the geometry to achieve the desired crane arm movements and force distribution within the working area.

It should be emphasized that several of the parts of the crane described above, in particular the horizontal link 8, the knee link 9, the strut link 17 and the lifting yoke 24, are in practice doubled and arranged one on each side of the main beam 6.

With reference to Fig. 3, it can also be mentioned that the pillar 1 is suitably formed with a convexly shaped guide surface 33 for forcibly guiding the lifting yoke 24 and the journaling of the lifting cylinder in the pivot point 23 during the movement of the crane arm out of an extremely raised or lowered position. A fixed position 34 may be formed as a recess in the underside of the beam 6 for receiving the horizontal link and the pivot point 23 in the extreme position.

The crane described above can be adapted for many different applications, of which the following are just a few examples of the crane's usefulness of the crane:
- for use in the forest industry, the crane may, for example, be configured to support a forest harvesting unit or a timber gripper,
- for use in agriculture, environmental control and construction, the crane may, for example, be configured to support a brush cutter, a mower, a flushing nozzle or a blade or excavator bucket,
- for use in the transport, manufacturing or assembly industry, the crane may, for example, be configured to support a cage in a skylift, or a tool such as a gripper, a magnetic holder, a claw or lifting eye, or a machining tool such as a welding nozzle, spray nozzle, drilling machine etc.,
- for use in medical or dental care, the crane may, for example, be configured to support a lifting sling, stretcher or bunk, an instrument tray, etc.
- for use in the shipping, harbour and fishing industry, in the form of a crane for handling goods, equipment, fishing gear, etc.

## Claims

1. A crane comprising at least three parts articulately interconnected in a plane in the form of a pillar (1), a crane arm (3) and a lifting boom (2) inserted therebetween,
- wherein the lifting boom (2) has a main beam (6) which is pivotally connected to the pillar (1) via an inner joint (4) and is pivotally connected to the crane arm (3) via an outer joint (5),
- wherein the lifting boom (2) comprises a parallel strut (7) pivoting parallel to the main beam (6), which via an inner link (8) pivotally coupled between the parallel strut (7) and the main beam (6), as well as an outer link (9) pivotally coupled between the parallel strut (7) and the main beam (6) together with the main beam (6) form a parallel trapezoidal geometry,
- wherein the inner link, hereinafter referred to as the horizontal link (8), is arranged to be actuated by an angular adjusting device (10) acting between the main beam (6) and the horizontal link (8) so as to pivot about its pivot point (13) in the main beam (6), as well as via the parallel strut (7) and the outer link, hereinafter referred to as the knee link (9), to adjust the angular position of the crane arm (3) relative to the main beam (6) in the outer joint (5),
- wherein a lifting yoke (24) is pivotally journaled in the main beam (6), which for lifting and lowering the lifting boom (2) is actuated by a lifting device (20),
- wherein the horizontal link (8) and the lifting yoke (24) are mutually connected via a strut (27) of a fixed length articulately connected to both of them, whereby the lifting yoke (24) is slavishly brought along in the pivoting of the horizontal link (8) under the action of the angle adjusting device (10), **characterized in**
- **that** the lifting yoke (24) forms a two-armed lever, which at one end is articulately connected to the lifting device (20) at a pivot point (23) and at an opposite end is articulately connected to the strut (27) at a pivot point (26), and is pivotally mounted in the main beam (6) via a pivot point (25) located between the pivot points (23) and (26), separate from the journaling (4) of the main beam (6) in the pillar (1).

2. The crane according to claim 1, wherein a distance RS between the pivot points (23) and (25) is less than a distance RL between the pivot points (4) and (25), and the length M of a lever between the pivot points (4) and (23) varies according to the **formula ΔM ≤ 2RS** (**RS** < RL) proportional to the folding out (e) of the crane arm (3) from the lifting boom (2).

3. The crane according to claim 2, wherein the length of RS is in the order of 30-70 % of RL, and is at least in the order of 40-60 % of RL, and preferably constitutes about 50 % of RL.

4. The crane according to any one of the preceding claims, wherein the pillar (1) has a convex surface (33) facing the lifting yoke (24) effective for forcibly guiding the lifting yoke (24) when the crane arm is pivoted from an extreme position.

5. The crane according to any one of the preceding claims, wherein a pneumatic or gas-hydraulic energy storage means (29) is articulately connected to the lifting yoke (24) and arranged to operate parallel to the lifting device (20).

6. The crane according to claim 5, wherein the energy storage means (29) is arranged in fluid connection (31) with a gas-filled volume (30) in the interior of the pillar (1).

7. The crane according to claim 6, wherein the pillar (1) comprises a connection (32) for refilling and emptying gas, respectively, from the volume (30) in the interior of the pillar.

## Patentansprüche

1. Kran, umfassend mindestens drei Teile, die in einer Ebene in Form einer Säule (1), eines Kranarms (3) und eines dazwischen eingesetzten Hubauslegers (2) gelenkig miteinander verbunden sind,
- wobei der Hubausleger (2) einen Hauptträger (6) aufweist, der über ein inneres Gelenk (4) schwenkbar mit der Säule (1) verbunden ist und über ein äußeres Gelenk (5) schwenkbar mit dem Kranarm (3) verbunden ist,
- wobei der Hubausleger (2) eine parallel zum Hauptträger (6) schwenkende Parallelstrebe (7) umfasst, die über ein inneres Verbindungsglied (8), das schwenkbar zwischen der Parallelstrebe (7) und dem Hauptträger (6) gekoppelt ist, sowie ein äußeres Verbindungsglied (9), das schwenkbar zwischen der Parallelstrebe (7) und dem Hauptträger (6) gekoppelt ist, zusammen mit dem Hauptträger (6) eine parallele Trapezgeometrie bildet,
- wobei das innere Verbindungsglied, im Folgenden als Horizontalglied (8) bezeichnet, dazu ausgelegt ist, durch eine Winkeleinstellvorrichtung (10) betätigt zu werden, die zwischen dem Hauptträger (6) und dem Horizontalglied (8) wirkt, um um dessen Drehpunkt (13) im Hauptträger (6) zu schwenken, sowie über die Parallelstrebe (7) und das äußere Verbindungsglied, im Folgenden als Knieglied (9) bezeichnet, die Winkelstellung des Kranarms (3) in Bezug zum Hauptträger (6) im äußeren Gelenk (5) einzustellen,
- wobei ein Hubjoch (24) schwenkbar in dem Hauptträger (6) gelagert ist, das zum Heben und Senken des Hubauslegers (2) durch eine Hubvorrichtung (20) betätigt wird,
- wobei das Horizontalglied (8) und das Hubjoch (24) über eine Strebe (27) mit fester Länge miteinander verbunden sind, die gelenkig mit beiden verbunden ist, wodurch das Hubjoch (24) beim Schwenken des Horizontalglieds (8) unter der Einwirkung der Winkeleinstellvorrichtung (10) zwangsweise mitgeführt wird, **dadurch gekennzeichnet,**
- **dass** das Hubjoch (24) einen zweiarmigen Hebel bildet, der an einem Ende gelenkig mit der Hubvorrichtung (20) an einem Drehpunkt (23) verbunden ist und an einem gegenüberliegenden Ende gelenkig mit der Strebe (27) an einem Drehpunkt (26) verbunden ist und über einen zwischen den Drehpunkten (23) und (26) angeordneten Drehpunkt (25) schwenkbar in dem Hauptträger (6), getrennt von der Lagerung (4) des Hauptträgers (6) in der Säule (1), gelagert ist.

2. Kran nach Anspruch 1, wobei ein Abstand RS zwischen den Drehpunkten (23) und (25) kleiner als ein Abstand RL zwischen den Drehpunkten (4) und (25) ist und die Länge M eines Hebels zwischen den Drehpunkten (4) und (23) gemäß der Formel ΔM ≤ 2RS (RS < RL) proportional zum Ausklappen (e) des Kranarms (3) aus dem Hubausleger (2) variiert.

3. Kran nach Anspruch 2, wobei die Länge von RS in der Größenordnung von 30-70 % von RL liegt und mindestens in der Größenordnung von 40-60 % von RL liegt und vorzugsweise etwa 50 % von RL beträgt.

4. Kran nach einem der vorhergehenden Ansprüche, wobei die Säule (1) eine konvexe Oberfläche (33) aufweist, die dem Hubjoch (24) zugewandt ist und wirksam ist, um das Hubjoch (24) zwangsweise zu führen, wenn der Kranarm aus einer Extremposition geschwenkt wird.

5. Kran nach einem der vorhergehenden Ansprüche, wobei ein pneumatisches oder gashydraulisches Energiespeichermittel (29) gelenkig mit dem Hubjoch (24) verbunden und dazu ausgelegt ist, parallel zur Hubvorrichtung (20) zu wirken.

6. Kran nach Anspruch 5, wobei das Energiespeichermittel (29) in Fluidverbindung (31) mit einem gasgefüllten Volumen (30) im Inneren der Säule (1) angeordnet ist.

7. Kran nach Anspruch 6, wobei die Säule (1) einen Anschluss (32) zum Nachfüllen beziehungsweise Entleeren von Gas aus dem Volumen (30) im Inneren der Säule umfasst.

## Revendications

1. Grue comprenant au moins trois parties interconnectées de manière articulée dans un plan sous la forme d'un pilier (1), d'un bras de grue (3) et d'une flèche de levage (2) insérée entre ceux-ci,
- la flèche de levage (2) comportant un longeron principal (6) qui est relié de manière pivotante au pilier (1) par l'intermédiaire d'une articulation intérieure (4) et qui est relié de manière pivotante au bras de grue (3) par l'intermédiaire d'une articulation extérieure (5),
- la flèche de levage (2) comprenant une entretoise parallèle (7) pivotant parallèlement au longeron principal (6), qui, par l'intermédiaire d'une liaison intérieure (8) accouplée de manière pivotante entre l'entretoise parallèle (7) et le longeron principal (6), ainsi que d'une liaison extérieure (9) accouplée de manière pivotante entre l'entretoise parallèle (7) et le longeron principal (6), forme avec le longeron principal (6) une géométrie trapézoïdale parallèle,
- la liaison intérieure, ci-après dénommée liaison horizontale (8), étant conçue pour être actionnée par un dispositif de réglage angulaire (10) agissant entre le longeron principal (6) et la liaison horizontale (8) de sorte à pivoter autour de son point de pivotement (13) dans le longeron principal (6), ainsi que par l'intermédiaire de l'entretoise parallèle (7) et de la liaison extérieure, ci-après dénommée liaison coudée (9), pour régler la position angulaire du bras de grue (3) par rapport au longeron principal (6) dans l'articulation extérieure (5),
- une fourche de levage (24) étant tourillonnée de manière pivotante dans le longeron principal (6), qui pour lever et abaisser la flèche de levage (2) est actionnée par un dispositif de levage (20),
- la liaison horizontale (8) et la fourche de levage (24) étant mutuellement reliées par l'intermédiaire d'une entretoise (27) de longueur fixe reliée de manière articulée aux deux, la fourche de levage (24) étant entraînée servilement dans le pivotement du bras horizontal (8) sous l'action du dispositif de réglage angulaire (10), **caractérisée en ce**
- **que** la fourche de levage (24) forme un levier à deux bras qui, à une extrémité, est relié de manière articulée au dispositif de levage (20) en un point de pivotement (23) et, à une extrémité opposée, est relié de manière articulée à l'entretoise (27) en un point de pivotement (26), et est monté de manière pivotante dans le longeron principal (6) par l'intermédiaire d'un point de pivotement (25) situé entre les points de pivotement (23) et (26), séparé du tourillon (4) du longeron principal (6) dans le pilier (1).

2. Grue selon la revendication 1, une distance RS entre les points de pivotement (23) et (25) étant inférieure à une distance RL entre les points de pivotement (4) et (25), et la longueur M d'un levier entre les points de pivotement (4) et (23) variant selon la formule ΔM ≤ 2RS (RS < RL) proportionnellement au dépliage (e) du bras de grue (3) par rapport à la flèche de levage (2).

3. Grue selon la revendication 2, la longueur de RS étant de l'ordre de 30 à 70 % de RL, et étant au moins de l'ordre de 40 à 60 % de RL, et de préférence constituant environ 50 % de RL.

4. Grue selon l'une quelconque des revendications précédentes, le pilier (1) présentant une surface convexe (33) faisant face à la fourche de levage (24) et permettant de guider de force la fourche de levage (24) lorsque le bras de grue est pivoté à partir d'une position extrême.

5. Grue selon l'une quelconque des revendications précédentes, un moyen de stockage d'énergie pneumatique ou gaz-hydraulique (29) étant relié de manière articulée à la fourche de levage (24) et conçu pour fonctionner parallèlement au dispositif de levage (20).

6. Grue selon la revendication 5, le moyen de stockage d'énergie (29) étant disposé en liaison fluidique (31) avec un volume rempli de gaz (30) à l'intérieur du pilier (1).

7. Grue selon la revendication 6, le pilier (1) comprenant une liaison (32) pour remplir et vider le gaz, respectivement, du volume (30) à l'intérieur du pilier.
